# EUROPEAN PATENT APPLICATION

(11) **EP 3 932 209 A1**
(43) Date of publication of application: **05.01.2022**
(21) Application number: 21182758.9
(22) Date of filing: 30.06.2021
(51) Int. Cl.: A23G 9/04, A23G 9/44

(54) **FROZEN AERATED CONFECTION**

(30) Priority: 30.06.2020 GB 202010012
(71) Applicant: Iconi Limited, London SW19 7PB (GB)
(72) Inventor: Meldrum, John, London, SW19 7PB (GB); Coppola, Giovanni Paulo, London, SW19 7PB (GB)
(74) Representative: Pure Ideas Limited

(57) **Abstract**

An aspect of the invention provides a method of producing a frozen aerated confection, the method comprising: preparing a mixture of ingredients for the frozen aerated confection; aerating the mixture to an overrun phase volume between 20% and 25%; freezing the mixture from a first temperature to a second temperature while under a shear load to an ice phase volume between 30% and 35%; and maintaining the overrun phase volume, ice phase volume and second temperature until consumption.

## Description

This specification relates to frozen aerated confections. In particular, although not exclusively, this specification relates to a method of preparing a frozen aerated confection, and a product thereof. Further, it is a non-exclusive object of this specification to provide a frozen aerated confection which has an improved body, texture and palatability, resulting in an improved consumer experience.

Frozen aerated confections such as ice cream, gelato, sorbet, sherbert, granita, frozen custard, frozen yogurt and the like are complex multi-phase materials with a highly close-packed microstructure which influences body, texture, palatability and eating experience.

At a general level, the microstructure includes air bubbles, ice crystals and a matrix phase including water, sugars, and proteins.

The volume of air bubbles in a microstructure is closely related to a characteristic of the frozen aerated confection named overrun. Overrun is determined by the difference in volume of the frozen aerated confection obtained after the freezing process, compared with the volume of the mixture of ingredients before aerating and freezing the mixture. The amount of air incorporated affects the body, texture and palatability of the frozen aerated confection.

Further, ice formation during freezing (including the amount and interconnectivity of ice crystals) is essential in the resulting body, texture and palatability, and consumer experience of the frozen aerated confection. Ice crystal size is governed by the mix formulation, as well as by factors relating to the freezing process. Small ice crystals, around 10 to 20 µm in size, provide a smooth and creamy texture, whereas larger ice crystals, greater than 50 µm, provide a grainy texture.

EP1787527 attempts to provide an ice cream with a texture which is smoother, creamier and have a warmer mouth feel than a conventional ice cream.

However, there are known difficulties in achieving a frozen aerated confection that provides an improved body, texture and palatability.

For example, ice cream in Europe is typically produced at around minus five degrees Celsius and then further frozen to around minus 18 degrees Celsius for storage and/or transport causing ice accretion and an increase in ice crystal size. In standard quality frozen aerated confections, this provides a soft texture dominated by air. For premium (low overrun) frozen aerated confections in Europe, this provides a firm, brittle texture dominated by accreted ice.

There is, therefore, a need to provide a frozen aerated confection which alleviates one or more problems associated with the prior art.

Accordingly, an aspect of the invention provides a method of producing a frozen aerated confection, the method comprising: preparing a mixture of ingredients for the frozen aerated confection; aerating the mixture to an overrun phase volume between 20% and 25%; freezing the mixture from a first temperature to a second temperature while under a shear load to an ice phase volume between 30% and 35%; and maintaining the overrun phase volume, ice phase volume and second temperature until consumption.

The first temperature may be ambient room temperature.

The second temperature may be minus eight degrees Celsius.

The frozen aerated confection may be ice cream, gelato, sorbet, sherbert, granita, frozen custard or frozen yogurt.

The mixture may include water, sugars, proteins and particulates

Aerating the mixture may include whipping the mixture using a blade at a speed between 20 and 60 rpm.

The method may further include aerating the mixture to produce an average size of air bubbles with a width of 50 µm or less.

The method may further include freezing the mixture to produce an average size of ice crystals with a width of 20 µm or less.

The overrun phase volume may be 23%.

The ice phase volume may be 33%.

A further aspect provides a frozen aerated confection, including: an overrun phase volume between 15% and 30%; and an ice phase volume between 30% and 35%, wherein between production and consumption the overrun phase volume and ice phase volume have been maintained.

The temperature of the frozen aerated confection at the end of production and at consumption may be minus eight degrees Celsius.

Embodiments of the frozen aerated confection are described, by way of example, with reference to the accompanying drawings, in which:
Figure 1 shows quiescent ice growth of a typical European ice cream;
Figure 2 shows quiescent ice growth of a premium low overrun ice cream;
Figure 3 shows ice growth under shear according to the present invention; and
Figure 4 shows the phase volumes (y-axis) for (A) typical European ice cream, (B) the present invention, and (C) premium low overrun ice cream.

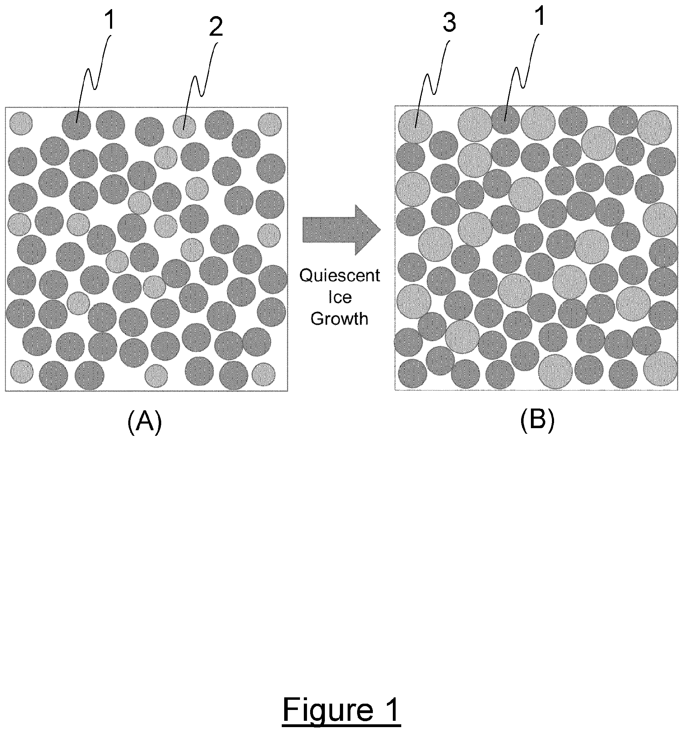

Referring firstly to figure 1, there is shown a microstructure of a known frozen aerated confection including air bubbles (1) and ice crystals (2). Typical European ice cream includes accreted ice crystals (3) due to further freezing after production. As shown in figure 1, the ice crystals grow in size between production (1A) and consumption (1B). As discussed previously, there are problems associated with this approach.

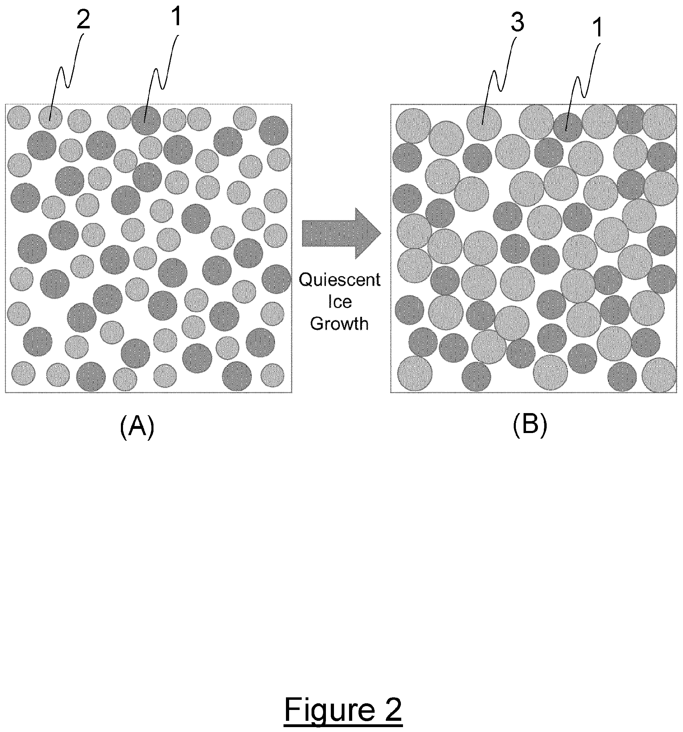

Now referring to figure 2, there is shown a microstructure of a known frozen aerated confection including air bubbles (1) and ice crystals (2). Premium low-overrun ice cream includes accreted ice crystals (3) due to further freezing after production. As shown in figure 2, the ice crystals grow in size between production (2A) and consumption (2B). As discussed previously, there are problems associated with this approach.

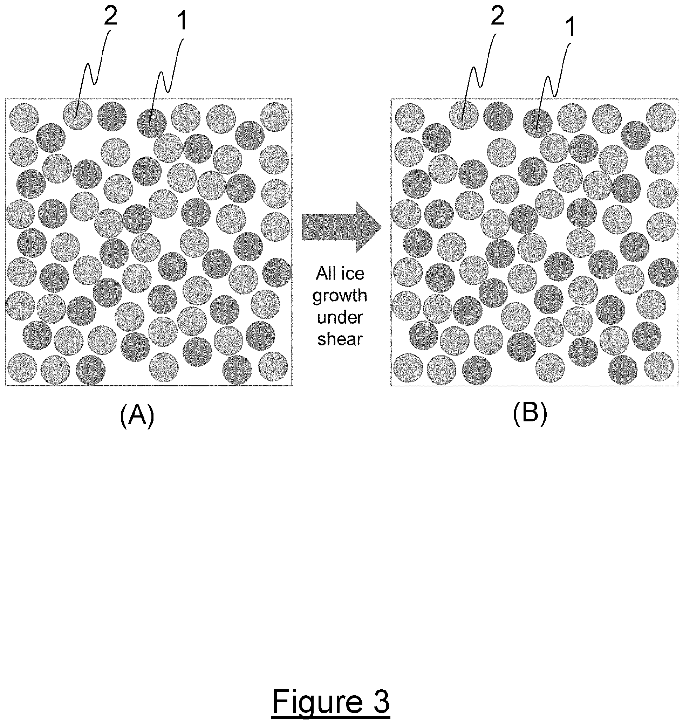

Now referring to figure 3, a microstructure of a frozen aerated confection is shown according to the present invention. The frozen aerated confection includes air bubbles (1) and ice crystals (2).

The number and size of air bubbles (1) determines an overrun phase volume. The overrun phase volume is between 15% and 30%, meaning an increase in volume of the mixture between 15% and 30% from the original volume of the mixture. The overrun phase volume may be 23%. This may be advantageous to provide a denser frozen aerated confection with an improved body, texture and palatability, resulting in an improved consumer experience.

Growth in ice crystal (2) size determines an ice phase volume. Ice phase volume is the difference in volume of water in the mixture and the volume of the ice crystals after the freezing process. The ice phase volume is between 25% and 35%. The phase volume may be 33%. This may be advantageous to provide a frozen aerated confection with an improved body, texture and palatability, resulting in an improved consumer experience.

Temperature of the frozen aerated confection has an effect on the ice crystal growth. For example, the prior art includes producing an aerated liquid confection at around minus five degrees Celsius and then freezing the confection further to around minus 18 degrees Celsius for storage. This causes ice accretion and an increase in ice crystal size.

The temperature of the frozen aerated confection mixture before freezing may be an ambient room temperature. The ambient room temperature may be higher than the freezing point for water at atmospheric pressure, *i.e.,* above zero degrees Celsius. This may be advantageous to easily store and/or transport the mixture.

The temperature of the frozen aerated confection after freezing may be between minus five and minus ten degrees Celsius, preferably minus eight degrees Celsius. Further, the temperature of the frozen aerated confection at consumption may be minus eight degrees Celsius. The temperature of the frozen aerated confection may be maintained between freezing and consumption. For example, the frozen aerated confection does not undergo a further freezing step for storage and/or transport, before consumption. This may be advantageous to avoid ice accretion and an increase in ice crystal size.

The ice crystals (2) may be formed under a shear load. The shear load may be applied during the freezing process of the frozen aerated confection mixture. The ice crystal structure may undergo plastic deformation during the freezing process. This may be advantageous to provide the frozen aerated confection with a firm plastic texture dominated by non-accredited ice.

A further aspect of the invention provides a method of producing a frozen aerated confection. The method comprises preparing a mixture of ingredients for the frozen aerated confection. The mixture may include water, sugars, and proteins, for example.

The mixture is then aerated to an overrun phase volume between 15% and 30%, preferably 23%. The mixture may be aerated using methods known in the art. This may be advantageous to provide a denser frozen aerated confection with an improved body, texture and palatability, resulting in an improved consumer experience.

The mixture is then frozen from a first temperature to a second temperature. The first temperature may be the ambient room temperature. The second temperature may be between minus five and minus ten degrees Celsius, preferably minus eight degrees Celsius. The mixture is frozen (from the first temperature to the second temperature) while under a shear load. Further, the mixture is frozen to include an ice phase volume between 25% and 35%, preferably 33%. The mixture may be frozen while undergoing mixing. A container holding the mixture may include a source of cooling. The source of cooling may be uniform throughout a portion of the container. This may be advantageous to provide a frozen aerated confection with an improved body, texture and palatability, resulting in an improved consumer experience.

After freezing the mixture to the second temperature, the second temperature of the frozen aerated confection is maintained. The second temperature is maintained from freezing until consumption. Further, the overrun phase volume and ice phase volume are maintained from freezing until consumption. Maintaining the second temperature includes no intermediate steps of further freezing the frozen aerated confection between production and consumption. This may be advantageous to avoid ice accretion or an increase in ice crystal size.

The method may further include aerating the mixture by whipping the mixture. The mixture may be whipped using a blade at a speed between 20 and 60 rpm. This may be advantageous to provide a desired overrun and ice crystal size for an improved body, texture and palatability, resulting in an improved consumer experience.

The method may further include aerating the mixture to produce an average size of air bubbles with a width of 50 µm or less before freezing. This may be advantageous to provide and improved overrun and, therefore, an improved body, texture and palatability, resulting in an improved consumer experience

The method may further include freezing the mixture to produce an average size of ice crystals with a width of 20 µm or less. This may be advantageous to improve the ice crystal size and, therefore, an improved body, texture and palatability, resulting in an improved consumer experience.

Examples of frozen aerated confections may include ice cream, gelato, sorbet, sherbert, granita, frozen custard or frozen yogurt.

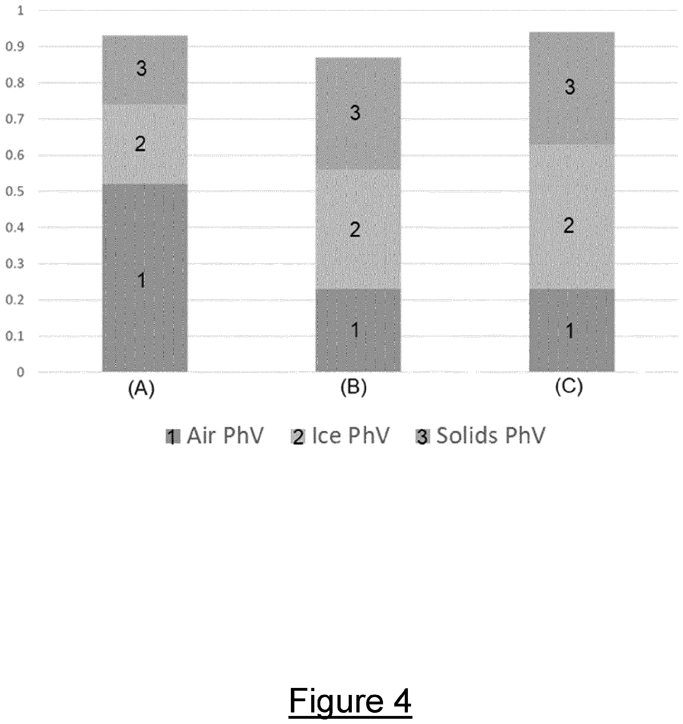

Now referring to figure 4, the phase volumes of (A) a typical European ice cream, (B) the present invention, and (C) a premium overrun ice cream are shown. The total phase volume increase percentage of the present invention (B) (represented where 1 is 100%) is lower than that of known standard and premium frozen aerated confections. This may be advantageous to provide a denser frozen aerated confection thereby providing an improved body, texture and palatability, resulting in an improved consumer experience.

While the invention has been illustrated and described in detail in the drawings and preceding description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. Each feature of the disclosed embodiments may be replaced by alternative features serving the same, equivalent or similar purpose, unless stated otherwise. Therefore, unless stated otherwise, each feature disclosed is one example of a generic series of equivalent or similar features.

In the claims, the word "comprising" does not exclude other elements or steps, and the indefinite article "a" or "an" does not exclude a plurality. Any reference signs in the claims should not be construed as limiting the scope.

## Claims

1. A method of producing a frozen aerated confection, the method comprising:
preparing a mixture of ingredients for the frozen aerated confection;
aerating the mixture to an overrun phase volume between 15% and 30%;
freezing the mixture from a first temperature to a second temperature while under a shear load to an ice phase volume between 25% and 35%; and
maintaining the overrun phase volume, ice phase volume and second temperature until consumption.

2. The method of claim 1, wherein the first temperature is the ambient room temperature.

3. The method of claims 1 or 2, wherein the second temperature is minus eight degrees Celsius.

4. The method of claims 1, 2 or 3, wherein the frozen aerated confection is ice cream, gelato, sorbet, sherbert, granita, frozen custard or frozen yogurt.

5. The method of any preceding claim, wherein the mixture includes water, sugars, and proteins.

6. The method of any preceding claim, wherein aerating the mixture includes whipping the mixture using a blade at a speed between 20 and 60 rpm.

7. The method of any preceding claim, further including aerating the mixture to produce an average size of air bubbles with a width of 50 µm or less.

8. The method of any preceding claim, further including freezing the mixture to produce an average size of ice crystals with a width of 20 µm or less.

9. The method of any preceding claim, wherein the overrun phase volume is 23%.

10. The method of any preceding claim, wherein the ice phase volume is 33%.

11. A frozen aerated confection, including:
an overrun phase volume between 15% and 30%; and
an ice phase volume between 25% and 35%,
wherein between production and consumption the overrun phase volume and ice phase volume have been maintained.

12. The frozen aerated confection of claim 11, wherein the temperature of the frozen aerated confection at the end of production and at consumption is minus eight degrees Celsius.

13. The frozen aerated confection of claims 11 or 12, wherein the frozen aerated confection is ice cream, gelato, sorbet, sherbert, granita, frozen custard or frozen yogurt.

14. The frozen aerated confection of claims 11, 12 or 13, wherein the overrun phase volume is 23%.

15. The frozen aerated confection of any preceding claim, wherein the ice phase volume is 33%.
